# EUROPEAN PATENT APPLICATION

(11) **EP 1 376 907 A1**
(43) Date of publication of application: **02.01.2004**
(21) Application number: 02014317.8
(22) Date of filing: 27.06.2002
(51) Int. Cl.: H04B 10/18, H04B 10/08

(54) **Method and system for measuring the polarization mode dispersion of an optical signal transmitting device**

(71) Applicant: Adaptif Photonics GmbH, 21079 Hamburg (DE)
(72) Inventor: Rosenfeldt, Harald, Dipl.-Ing., 20251 Hamburg (DE)
(74) Representative: TER MEER STEINMEISTER & PARTNER GbR

(57) **Abstract**

Method for measuring the polarization mode dispersion of an optical signal transmitting device (10), comprising the steps of:
transmitting an optical data signal (12) through said device (10) from a transmitter side (14) to a receiver side (16)
passing a test signal (18) through the device (10) in a direction from the receiver side (16) to the transmitter side (14), and
measuring a characteristic parameter of the test signal (18) which has passed through the device.

## Description

### FIELD OF THE INVENTION

The present invention relates generally to optical fiber communication systems and in particular to the measurement of polarization mode dispersion.

### BACKGROUND OF THE INVENTION

During the last 10 years a tremendous growth has been seen in the application of fiber optic solutions to telecommunications and data communications. For applications requiring either high speeds or long distances, fiber optics now dominates all other technologies. The ongoing growth in bandwidth demand supports the trend of further increasing the per-channel bit rate in deployed networks. State-of-the-art communication systems use channel bit rates as high as 10 Gbit/s or 40 Gbit/s. At these bit rates, fiber properties are critically influencing the quality of the transmitted signal and thus have great impact on the bit error rate (BER) of the link. One important barrier is polarization mode dispersion (PMD).

Impairments induced by PMD can solely be compensated by an adaptive optical system rather than a passive one, since this effect is highly time variant and can change on a millisecond time scale. Ellipticity of the fiber core, as well as mechanical stress, caused for example by fiber bendings, creates propagation constants which are dependent on the signal polarization. An arbitrarily polarized signal having an arbitrary state of polarization (SOP) thus decomposes into two orthogonally polarized components traveling at different speeds. The polarization states of these two signals are commonly referred to as principal states of polarization (PSP), i.e. slow PSP and fast PSP. The delay between the two components is referred to as differential group delay (DGD). The influence of PMD on an optical signal is quite comparable to the phenomenon of multipath propagation and causes similar distortions such as inter-symbol interference.

The characterization of an optical fiber link with respect to PMD has thus become a matter of increasing importance. Fiber PMD is commonly measured using either interferometrical approaches or polarimetric approaches (typically the Jones Matrix Eigenanalysis, JME). The interferometric approach characterizes a fiber link with respect to its average differential group delay while the JME method measures the wavelength-dependent Jones matrix which contains comprehensive information about the fiber PMD, i.e. PSPs and DGD as a function of wavelength. Both of these measurement schemes require the fiber link to be connected to a dedicated measurement setup.

### SUMMARY OF THE INVENTION

It is an object of the invention to provide a more efficient tool for the analysis of polarization mode dispersion of an optical signal transmitting device.

According to the invention, this object is achieved with the features indicated in the independent claims 1 and 7.

The invention provides a method and a system which permit to measure the polarization mode dispersion of an optical signal transmitting device, e. g. an optical fiber link, while this device is in a service mode for transmitting an optical data signal from a transmitter side to a receiver side.

Since PMD is a highly statistical phenomenon changing dramatically over time and wavelength, it is highly advantageous to be able to measure the PMD at the operating wavelength of the transmitter while the link is in service, in order to correlate signal impairments to the instantaneous PMD level. Performing in-service PMD measurements is as well interesting for qualifying PMD compensators (PMDCs). By correlating signal impairments to the link PMD it is possible to gain knowledge on the PMDC performance as a function of the instantaneous fiber PMD level.

The method according to the invention comprises the steps of: transmitting an optical data signal through said device from a transmitter side to a receiver side, passing a test signal through the device in the direction from the receiver side to the transmitter side, and measuring a characteristic parameter of the test signal which has passed through the device.

Since the data signal and the test signal are passed through the device in opposite directions, it is possible to measure the polarization mode dispersion by means of the test signal without causing interference with the data signal.

Preferred embodiments of the invention are indicated in the dependent claims.

Preferably, the JME method can be used in counter-propagating direction to determine the Jones matrix at the operating wavelength of the data signal. Inverting this Jones matrix yields the Jones matrix of the device under test in forward direction.

In an enhanced embodiment, the launch state of polarization of the modulated data signal is measured using an additional polarimeter relative to the base coordinate system of the measured Jones matrix in forward direction. Knowledge on the fiber's Jones matrix together with the signal launch state of polarization enables simulation of the resulting signal impairments and comparison to the corresponding experimental results.

The application of this method to PMD emulators instead of a fiber link offers various benefits. Since many types of PMD emulators cannot be tuned deterministically to a particular state where they exhibit a known Jones matrix, it is often difficult to analyze system performance as a function of instantaneous PMD. Using the described in-service PMD measurement, it is now possible to correlate system performance (possibly including a PMD compensator) to the instantaneous PMD, i.e. the instantaneous Jones matrix, of the emulator. This experimentally reveals operating conditions under which a plain system or a PMD-compensated system shows high or low performance.

Furthermore, this method provides a tool for quickly gathering experimental data about outage statistics of a PMD-disturbed system, i.e. information about how often a PMD-induced system failure will occur when using an installed fiber. The common approach to get this information is to use a PMD-emulator dynamically reproducing the same statistics as an installed fiber, e.g. an emulator showing the well-known Maxwell statistics of the differential group delay (DGD). The interesting states, however, are the states with the instantaneous differential group delay of the emulator being high, because these states are likely to cause system failures. Since these states occur very rarely, it has heretofore been necessary to perform measurements over a long period of time, assuring that the emulator has generated high-DGD samples sufficiently often. Given a computer-controlled tunable PMD emulator capable of deterministically reproducing different states with an unknown Jones matrix, the in-service PMD measurement concept can measure the Jones matrix corresponding to the different settings without disconnecting the PMD emulator. During the experiment the computer can set up the high-DGD states more frequently than for a random adjustment. This emphasizes relative frequency of the samples with a high DGD. The observed outage probability density function (PDF) can be corrected using a-priori knowledge on the statistics of an installed fiber. This statistical method is commonly known as importance sampling.

### BRIEF DESCRIPTION OF THE DRAWINGS

Preferred embodiments of the invention will now be described in conjunction with the accompanying drawings, in which
- Fig. 1: shows a setup for in-service PMD measurement of a fiber link;
- Figs. 2 and 3: show setups for in-service PMD measurement of a fiber link and a PMD compensator;
- Fig. 4: shows a setup for in-service PMD measurement of a fiber link and simultaneous measurement of the launch polarization state of the data signal;
- Fig. 5.: shows a setup for in-service PMD measurement of a fiber link and simultaneous measurement of the output polarization state of the data signal;
- Figs. 6 - 8: show setups for determining the Jones matrix of a PMD-emulator;
- Fig. 9: shows a tunable PMD emulator comprising birefringent elements and polarization controllers; and
- Fig. 10: shows an exemplary probability density function of the instantaneous differential group delay of an installed fiber link.

### DETAILED DESCRIPTION OF THE INVENTION

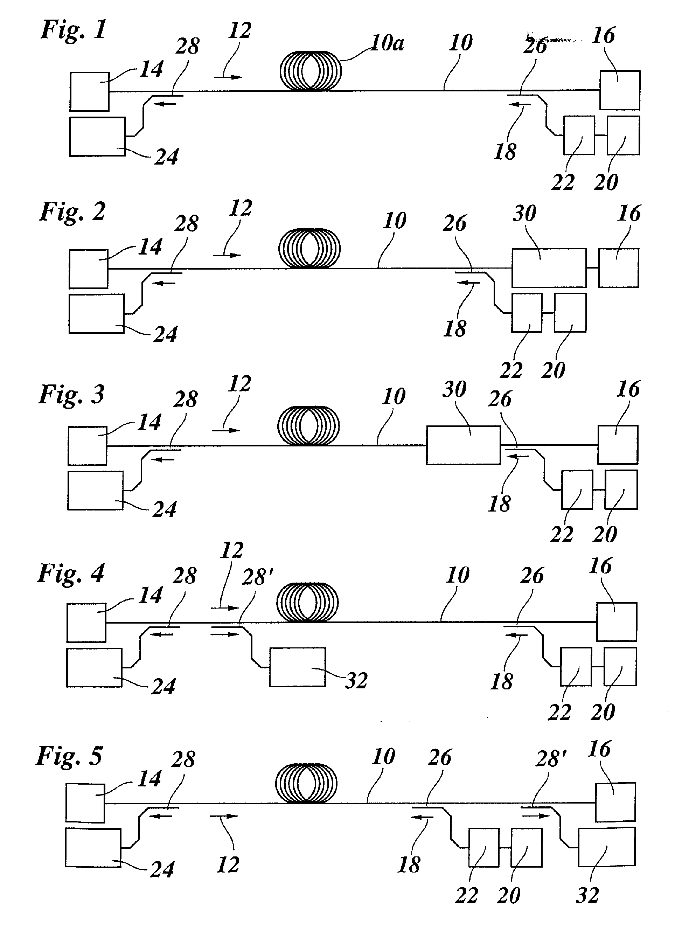

In Figure 1, an optical fiber 10, e. g. a single-mode fiber, serves as an optical signal transmitting device and is used to transmit a modulated optical data signal 12 from a transmitter 14 to a receiver 16. Polarization mode dispersion (PMD) causes the launched optical signal 12 to split up into many different polarized components traveling at different propagation velocities. Thus, short pulses are broadening as they travel along the fiber link. The reason for this effect is the local birefringence of the fiber. Due to an elliptical core and mechanical stress (e.g. induced by bendings 10a) the fiber becomes birefringent and creates different propagation velocities depending on the signal polarization.

Within the so-called coupling length this behavior can be approximated by a waveplate with a certain retardation expressed by its differential group delay. Since the local birefringence varies randomly along the fiber, an established way for modeling polarization mode dispersion is to concatenate many randomly oriented waveplates of either varying or fixed retardation. This leads directly to some disturbing characteristics of fiber PMD: the dependence on cabling and the random variation over time. Since the fiber bendings are induced randomly during the cabling process, the same fiber type may show different PMD values after cabling and installation. Furthermore, the birefringence is subject to change according to changing environmental conditions like temperature, air pressure or human induced perturbations of the fiber.

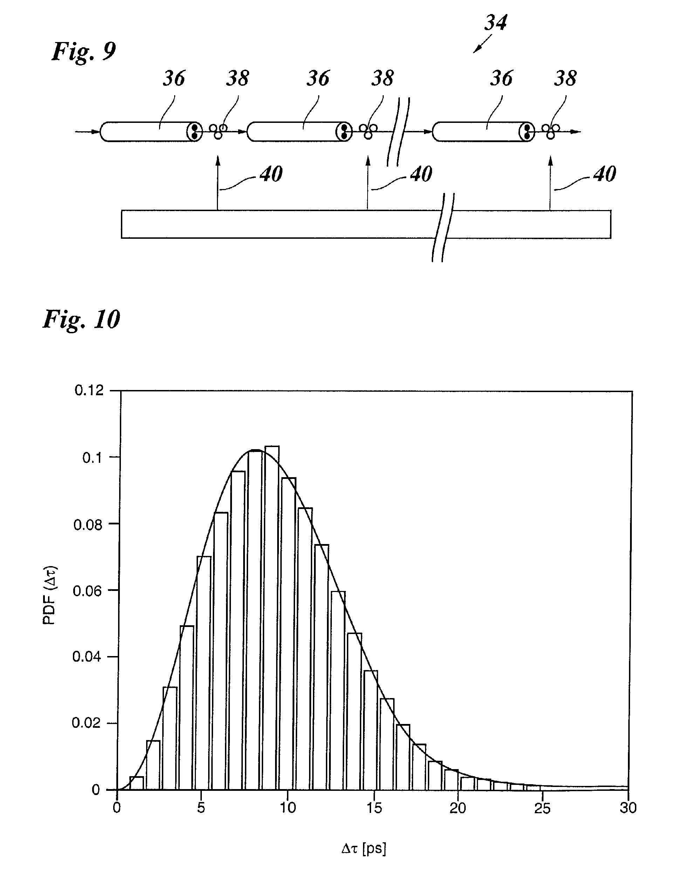

This makes the polarization mode dispersion a statistical, dynamically changing value which is difficult to handle in practice. The polarization mode dispersion of a fiber is commonly described by the so-called principal states of polarization (PSP) and the differential group delay (DGD). In this description an optical signal decomposes into two orthogonally polarized components traveling at different propagation speeds and thus exiting the fiber with a small time difference equal to the differential group delay. This description, however, is an approximation and is only valid within a certain optical bandwidth. A matter which has often been neglected in the past is the fact that polarization mode dispersion of an installed fiber cannot fully be described by two fixed principal states of polarization and a constant differential group delay between them. Higher-order effects are causing signal impairments as well and have to be considered particularly when analyzing the PMD-induced impact on a system's outage probability. Considering these higher-order effects, the principal states of polarization and the differential group delay become a function of optical wavelength and the fiber behavior is most conveniently described by its wavelength-dependent Jones matrix. It turns out that the differential group delay observed over a long period of time at a certain wavelength is a stochastic variable being Maxwellian distributed (see Fig. 10). Hence, one has to distinguish between the (Maxwellian distributed) instantaneous differential group delay of a fiber (at a certain wavelength) and its expectation value, i.e. the average differential group delay, which is commonly referred to as 'the PMD of a fiber'. Provided that a given fiber is a typical sample, the PMD statistics is completely described by its PMD coefficient.

The emerging problems caused by polarization mode dispersion evoke the necessity to characterize optical communication systems with respect to PMD. This includes system tests using plain installed fiber links but also systems with an active PMD compensator intended to cancel the accumulated fiber PMD. The test and measurement tasks can be classified as field-tests at an installed fiber link and lab-tests using a PMD-emulator simulating the behavior of a real fiber link.

Standard techniques for measuring polarization mode dispersion, such as interferometric methods or the Jones matrix eigenanalysis (JME), require exclusive access to the particular fiber link and thus cannot measure fiber PMD while the link is in-service. Thus, these techniques are widely used for off-line field measurements to characterize the installed fiber base with respect to the PMD per link in order to select fiber links with a sufficiently low PMD coefficient.

For field application, the capability of measuring the fiber PMD while the link is in service is particularly useful for tracking random system outages and correlating them to the changing polarization mode dispersion of the fiber. The present invention offers this possibility by applying standard measurement procedures using optical test signals 18 (Fig. 1) traveling into the opposite direction to the data traffic. In this way, the polarization mode dispersion of the fiber can precisely be determined at exactly the wavelength which is used by the optical data transmitter 14.

In Fig. 1, the optical data signal 12 launched by the transmitter 14 is traveling in forward direction through the fiber link before it is received at the receiver 16.

PMD measurement is performed at the same time using a stimulus or test signal 18 traveling into the opposite direction, i. e., from the side of the receiver 16 towards the transmitter 14. In this example the polarization mode dispersion measurement is performed using the Jones matrix eigenanalysis which requires a wavelength-tunable laser source 20 combined with a polarization controller 22 as stimulus and a polarimeter 24 at the output observing the frequency dependence of the polarization state. The tunable laser scans across the bandwidth occupied by the data signal 12 and reveals thus the instantaneous (wavelength-dependent) Jones matrix within the relevant wavelength interval. Analysis of the Jones matrix reveals the instantaneous differential group delay. In this setup, directional couplers 26, 28 are used to launch the backward traveling light. It is obvious that they can be replaced by optical circulators avoiding the loss of optical power. Continuously gathering information on the instantaneous PMD while the link is in-service allows correlating system outages or occasional performance degradations to the measured PMD.

Figure 2 shows a modified setup, in which a PMD compensator 30 is interposed between the fiber link and the receiver 16 so as to compensate the polarization mode dispersion of the fiber 10. The compensator 30 may be considered to include a number of concatenated optical elements the birefringence behavior of which can be set individually. The aim is to adjust the settings of the compensator 30 such that its optical elements produce a PMD which is opposite to that of the fiber 10. In other words, the Jones matrix of the compensator 30 should be the inverted Jones matrix of the fiber 10 for each frequency within the bandwidth of the data signal 12. It is clear that the knowledge of the frequency-dependent Jones matrix of the fiber 10, as obtained by means of the text signals 18, greatly helps to find the correct settings for the compensator 30.

Figure 3 illustrates yet another setup, in which the test signals 18 are passed not only through the fiber 10 but also through the compensator 30, so that the combined effect of the PMDs of the fiber 10 and the compensator 30 can be tested. Then, ideally, the total Jones matrix measured by means of the test signals 18 should be close to unity.

A possible improvement is shown in Figs. 4 and 5. If it is desired to reproduce the particular measured operating conditions in a computer model, the missing part aside from the system's Jones matrix is information on the launch polarization state of the data signal 12. This information can be measured by an additional polarimeter 32 connected to another direction coupler 28' either at the input (Fig. 4) or at the output (Fig. 5) of the fiber 10. If the state of polarization is measured at the output it can easily be transformed to the input using the measured Jones matrix.

It is often desired to test optical communication systems in the laboratory under well-defined operating conditions. Part of such experiments is to simulate the behavior of an installed link as closely as possible. To explore the tolerance of a particular system configuration with respect to polarization mode dispersion, a common approach is to emulate the polarization mode dispersion by a tunable differential group delay element. Such a tunable DGD element is inserted into the optical path and can be tuned to any desired DGD value. Adjusting the input polarization of this emulator to the worst-case condition and increasing the differential group delay until a system outage occurs gives a rough estimate for the PMD tolerance of the system. However, such an emulator only shows first-order PMD which is unrealistic since a real fiber will also show higher-order PMD effects. Therefore, other concepts of PMD-emulators have been developed which allow generating first and higher-order PMD.

As is shown in Fig. 9, such an emulator 34 comprises, for example, several pieces of birefringent elements 36 which are interconnected with polarization controllers 38, e.g. fiber-squeezers. These polarization controllers 38 can be adjusted according to the applied parameter settings, e.g. a number of control voltages 40. Provided that the number of birefringent sections is sufficiently high (> 5), the instantaneous PMD changes according to the settings of the polarization controllers showing first-order PMD as well as higher-order PMD. A drawback of such an emulator is commonly that the instantaneous Jones matrix corresponding to the current polarization controller settings is generally unknown. The reason is that, due to changing environmental conditions, the Jones matrices of each polarization controller 38 as a function of applied voltages is not exactly known. Also the exact differential group delay and differential phase delay of each birefringent element 36, particularly in the case of birefringent fibers, is unknown. It is thus impossible to predetermine the polarization controller settings in order to generate a desired Jones matrix.

Hence, the polarization controllers are typically adjusted in a random manner while the bit error rate (BER) is monitored. Such a PMD-emulator exhibits the same statistics with respect to PMD as a real fiber link. Particularly the Maxwellian differential group delay distribution is well reproduced. Fig. 10 illustrates the Maxwell distribution of the outage probability density function PDF as dependent on the differential group delay Δτ. Continuously recording the BER over a long time interval while randomly changing the polarization controller settings gives an estimate for the outage probability being expected for an installed fiber. However, in case of an outage, no information about the corresponding Jones matrix of the emulator is available.

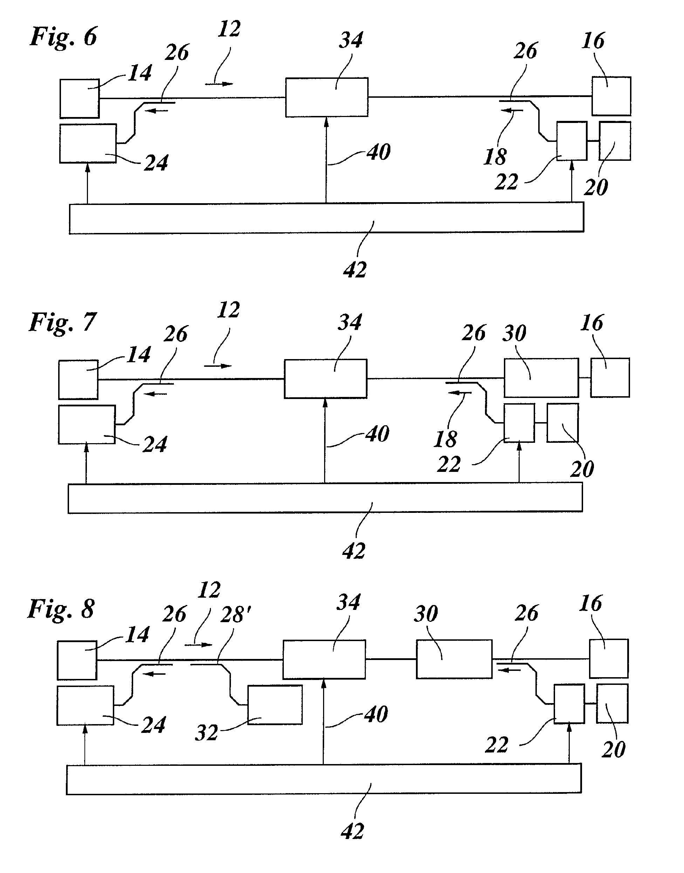

This problem is solved by the embodiments shown in Figs. 6 to 8 in an analogous way as described above by continuously measuring the Jones matrix of the emulator 34 in counter-propagating direction. Particular advantageous is to control the PMD-emulator 34 and the PMD measurement setup by a central control unit 42 which may receive the bit error rate detected at the receiver 16 as a feedback signal. Provided that the PMD-emulator can be reproducibly tuned to different states, the wavelength-dependent Jones matrices can be measured which are corresponding to these states. This yields a lookup table of different Jones matrices and corresponding polarization controller settings. It is now possible to apply so-called importance sampling. A way of implementing this is to tune the emulator sequentially to selected settings out of this lookup table. The settings are selected in a way that each differential group delay value is visited with the same relative frequency. The collected outage data has then to be weighted with the Maxwellian probability function to extrapolate the expected outage statistics with a real fiber.

The proposed method will also be applicable for characterizing the performance of PMD compensators (PMDCs). In this case the setup allows to correlate the Jones matrix of a fiber link 10 or PMD-emulator 34 to the observed bit error rate of the compensated data signal. This allows in particular to analyze operating conditions under which a PMDC-under-test performs well and under which it shows bad performance.

Figure 6 shows a plain setup for testing the emulator 34. Figures 7 and 8 show setups for testing the emulator 34 together with the compensator 30, similarly as in figures 2 and 3.

Of course, it is also possible in the embodiments shown in figures 6 to 8 to employ another polarimeter 32 as shown in figure 4 or 5 for simultaneously measuring the state of polarization of the data signal 12.

The embodiments described above may be modified in various ways. For example, the laser source 20 may be replaced by a white light source or an optical broadband noise source. Instead of the polarimeter 24 it is possible to employ an interferometer with tunable path differences or a combination of a polarimeter and a scanning Fabry-Perot interferometer.

## Claims

1. Method for measuring the polarization mode dispersion of an optical signal transmitting device (10; 34), comprising the steps of:
transmitting an optical data signal (12) through said device (10; 34) from a transmitter side (14) to a receiver side (16)
passing a test signal (18) through the device (10; 34) in a direction from the receiver side (16) to the transmitter side (14), and
measuring a characteristic parameter of the test signal (18) which has passed through the device.

2. Method according to claim 1, wherein said data transmitting device is an optical fiber (10).

3. Method according to claim 1, wherein said data transmitting device is a polarization mode dispersion emulator (34).

4. Method according to any of the preceding claims, wherein the data signal (12) is passed through a polarization mode dispersion compensator (30) before it reaches the receiver (16).

5. Method according to claim 4, wherein said test signal (18) is passed through the polarization mode dispersion compensator (30).

6. Method according to any of the preceding claims, comprising a step of measuring the state of polarization of the data signal (12).

7. System for measuring the polarization mode dispersion of an optical data transmitting device (10; 34) through which an optical data signal (12) is transmitted from a transmitter side (14) to a receiver side (16), **characterized by**:
a light source (20) generating an optical test signal (18),
a polarization controller (22) controlling the polarization of said test signal (18),
a first optical coupler (26) coupling said test signal (18) into said device (10; 34) on the receiver side (16),
a second optical coupler (28) extracting said test signal (18) from said device (10; 34) on the transmitter side (14), and
a detector (24) analyzing the test signal extracted by the second coupler (28).

8. System according to claim 7, wherein said detector is a polarimeter (24).

9. System according to claim 7 or 8, comprising a polarimeter (32) arranged to detect the state of polarization of the data signal (12).

10. System according to claim 9, wherein said polarimeter (32) is connected to a third optical coupler (28') which extracts a portion of said data signal (12) on the transmitter side (14) of said optical transmitting device (10; 34).

11. System according to any of the claims 7 to 10, wherein said light source (20) is adapted to emit light at different wavelengths.
